# EUROPEAN PATENT SPECIFICATION

(11) **EP 3 243 755 B1**
(45) Date of publication and mention of the grant of the patent: **25.03.2020**
(21) Application number: 17020202.2
(22) Date of filing: 09.05.2017
(51) Int. Cl.: B64F 1/34

(54) **WARNING DEVICE**
WARNVORRICHTUNG
DISPOSITIF D'AVERTISSEMENT

(30) Priority: 09.05.2016 GB 201608073
(43) Date of publication of application: 15.11.2017
(73) Proprietor: Duncan Holman Services Ltd, Alton, Lasham Hampshire GU34 5RX (GB)
(72) Inventor: Duncan, Holman, Alton, Hampshire GU34 5RX (GB); Brearley, Andrew, Alton, Hampshire GU34 5RX (GB); Maltby, Mark, Alton, Hampshire GU34 5RX (GB)
(74) Representative: Deans, Michael John Percy

(56) References cited:
- US-A- 4 077 234
- US-A- 5 253 891
- US-A1- 2012 045 906
- US-A1- 2012 235 381
- US-A1- 2012 309 214
- US-B1- 6 894 625

## Description

This disclosure relates to warning devices for use with ground support equipment capable of servicing aircraft, most particularly for ground power units that service parked aircraft.

Ground power units are typically used to supply power to aircraft while the aircraft is parked and stationary. The ground power units (GPUs) are generally mounted on a trailer or other towable device and are towed into position next to the aircraft by a tractor or similar. The trailer is then disconnected from the tractor. The power delivery means of the GPU is then connected to the aircraft, and the GPU is left in position next to the aircraft while power is supplied to the aircraft. Once the required power has been delivered, the power delivery means of the GPU is disconnected from the aircraft, the towable device is connected to the tractor and the GPU is then safely towed away from the aircraft once the required power has been delivered to the aircraft.

Problems, however, arise due to human errors in this seemingly simple process. The GPUs are towed into place, connected to the aircraft, disconnected from the aircraft and towed away again by people. When a person mistakenly begins to tow the GPU away from the aircraft while the power delivery means is still connected to the aircraft, huge damage can be done to the aircraft. The damage to the aircraft can cost tens of thousands of pounds each time such an incident occurs. Additionally, as GPUs may be connected to the aircraft until the aircraft is ready to taxi to the runway, an incident could occur when the aircraft is fully loaded with passengers and luggage, resulting in significant delays for the flight as all of the passengers and luggage need to be transferred to a non-damaged aircraft.

Human errors cannot be entirely prevented; however, steps can be taken to reduce the seriousness of the outcome of a human error in this type of situation.

Applicant's first attempt at producing a suitable device to reduce the seriousness of human errors in this type of situation involved attempting to physically prevent a person hitching a GPU to a tractor and towing the GPU away from an aircraft when the GPU was connected to the aircraft. An actuator was arranged so that when the power delivery means of the GPU was not safely stowed in a suitable holster, the actuator would forcefully move to occlude or obstruct the towing eye of the trailer upon which the GPU was situated, thus preventing the trailer from being hitched onto any tractor or other towing device. This attempt assumed that the persons handling the GPU, the tractor, and the trailer always remembered to unhitch the trailer from the tractor before connecting the power delivery means to the aircraft, and that the errors occurred due to persons re-hitching the trailer onto the tractor while the power delivery means was still attached to the aircraft.

This idea of physical prevention was not successful in practice. It became apparent that crews commonly left the trailer carrying the GPU attached to the tractor and then attached the power delivery means to the aircraft. This resulted in the actuator attempting to move into position to cover the towing eye, but being prevented by the presence of the towing hitch. This in turn resulted in numerous issues; the actuator motors burned out, there was a risk of crushing the fingers of the crew operating the GPU, and the actuator often became jammed onto the towing hitch. Additionally, given the noisy and hectic environment in which the crews were working, they would often not notice that the actuator was moving or had moved, or had attempted to move but the actuator motor had burned out, and they could therefore still drive the tractor and trailer away from the aircraft while the power delivery means was still attached to the aircraft.

US 6,894,625 B1 discloses an alternative warning device to provide an audio and visual warning to aircraft personnel when a ground power unit is connected to an aircraft and to a towing device at the same time. US 6,894,625 B1 contains a towbar switch 301 and a plug switch 405, both of which are normally closed. Towbar switch 301 is opened by manually raising the towbar, and plug switch 405 is opened by placing a gpu power cable into a holster. When both switches are closed, alerts are provided, and aircraft personnel must then notice the alert and take appropriate action.

Ground Power Units are just one example of ground support equipment that may require: towing into position near an aircraft; connection to the aircraft for a period of time; disconnection from the aircraft; and safe towing away from the aircraft. It is readily apparent that similar problems could arise if another type of ground support equipment were mistakenly towed away from the aircraft whilst still connected to the aircraft.

The present disclosure results from Applicant's work to create a device to suitably warn GPU crews, or crews operating other ground support equipment, as soon as a mistake in procedure is made, rather than to attempt to physically prevent the crews from acting contrary to procedure.

In a first aspect of this disclosure, there is provided a warning device for providing an alert to persons operating an aircraft ground support equipment, of the kind having a connector that is connected in use to an aircraft and occupies a stowed position when not so connected, the ground support equipment being provided with a first coupler adapted to couple with a second coupler mounted on a towing device to allow the ground support equipment to be towed by the towing device away from the aircraft; the warning device comprising: an alert mechanism, an actuator and a backplate, the actuator comprising an actuator body and a piston, the actuator body being biased in a forward direction away from the backplate, and the actuator being provided with a drive means providing drive to the actuator to extend the piston out of the actuator body in said forward direction towards said first coupler to occlude or obstruct it; the drive means being disabled when the connector is in the stowed position, and the actuator body being caused to move against the bias towards the backplate in the opposite direction to said forward direction if the piston engages an obstruction such as the second coupler indicating that the ground support equipment is coupled to the towing device, and the actuator continues to operate, which backwards motion triggers said alert mechanism.

Preferred embodiments of the first aspect of the above warning device have one or more of the following features: the towable ground support equipment is a towable power supply unit. The connector is a power supply means. The connector is a power cable. The towable power supply unit comprises a ground power unit positioned on a towable trailer. The first coupler comprises a hitching eye, and the second coupler comprises a corresponding tow-hitch. The second coupler comprises a hitching eye, and the first coupler comprises a corresponding tow-hitch. The first and second couplers are any two corresponding couplers for connecting a towing means to a towable device. Backwards motion of the actuator body causes the power to the actuator to be cut. Backwards motion of the actuator switches off the power supply unit. The alert provided is visual. The alert provided is a warning light. The alert provided is the movement of the actuator. The alert provided is aural. The alert provided is an alarm. The alert provided is the cutting of power to the actuator. The alert provided is the switching off of the GPU. The alert provided is any combination of the above alert means. An override function is provided to move the actuator piston in a backwards direction. A holster is provided for stowing the connector when it is not in use. The holster is provided on a tractor. The holster is provided on the GPU towing trailer. The holster is provided on the aircraft. The actuator is a linear actuator. The actuator is arranged so that a limited distance of backwards movement of the actuator body relative to the backplate is permitted. A mounting boss is affixed to the backplate. The mounting boss comprises an elongate slot, and the actuator body comprises a mounting pin which may be passed through the elongate slot. The mounting pin is able to slidably move along the slot, allowing motion of the actuator body relative to the backplate. The elongate slot allows for 0-2cm movement of the mounting pin and of the actuator body relative to the backplate. The elongate slot allows for 0-1cm movement of the mounting pin and of the actuator body relative to the backplate. The elongate slot allows for 1-9mm movement of the mounting pin and of the actuator body relative to the backplate. The elongate slot allows for 2-6mm movement of the mounting pin and of the actuator body relative to the backplate. The elongate slot allows for 3-5mm movement of the mounting pin and of the actuator body relative to the backplate. The elongate slot allows for 4mm movement of the mounting pin and of the actuator body relative to the backplate. An alternative fixing means is used, allowing limited relative movement of the actuator body relative to the backplate. The biasing means is a spring. The biasing means is a helical spring. The actuator and biasing means are positioned within a box. The piston has a bearing on its forwardmost end to support the piston. The piston has a bearing on its forwardmost end to reduce dirt ingress into the box. The backplate is one wall of the box.

In accordance with a second and alternative aspect of this disclosure, there is provided a method for warning persons operating towable aircraft ground support equipment when they make an error in procedure, the towable ground support equipment comprising: a connector adapted for connection to an aircraft in operation of the ground support equipment and having a stowable position when not in use, and a first coupler, the first coupler arranged to cooperate with a second coupler mounted on a towing device for towing of the ground support equipment away from an aircraft, the method comprising the steps of: mounting an actuator, comprising an actuator body and a piston, so that the actuator body is biased away from a backplate in a forward direction and the piston is extendable from the actuator body in operation of the actuator in said forward direction to occlude or obstruct said first coupler; controlling the actuator so that it is inoperable when the connector is in its stowed position; and the arrangement being such that, if the piston meets an obstruction during the forward motion in said forward direction, continued operation of the actuator thereafter causes the actuator body to move in a backwards direction opposite to said forward direction against said bias to trigger an alert mechanism to provide an alert to the persons operating the towable ground support equipment.

Preferred embodiments of a warning device in accordance with our teachings are described hereinbelow by way of example only with reference to the accompanying drawings in which:
Fig. 1 is a schematic drawing showing an actuator with its piston in its fully forward (fully extended) position, with no obstructions;
Fig. 2 is a schematic drawing showing the actuator with its piston in a partially forward (partially extended) position with an obstruction present;
Fig. 3 is a circuit diagram explaining the set-up of Figs. 1 and 2 ;
Fig. 4 is a perspective view of the rear of the body of the actuator, showing a switch that is triggered by backwards movement of the actuator body, and showing a biasing means (backplate omitted for clarity);
Fig. 5 is a cutaway perspective view of a backplate, showing the switch that is triggered by backwards movement of the actuator body, and the biasing means (actuator body omitted for clarity);
Fig. 6 is a perspective view of a mounting boss;
Fig. 7 is a perspective view of the actuator without any carry case or the back-plate (spring and mounting boss are shown); and
Fig 8 is a cutaway perspective view of the actuator positioned within a carry-case.

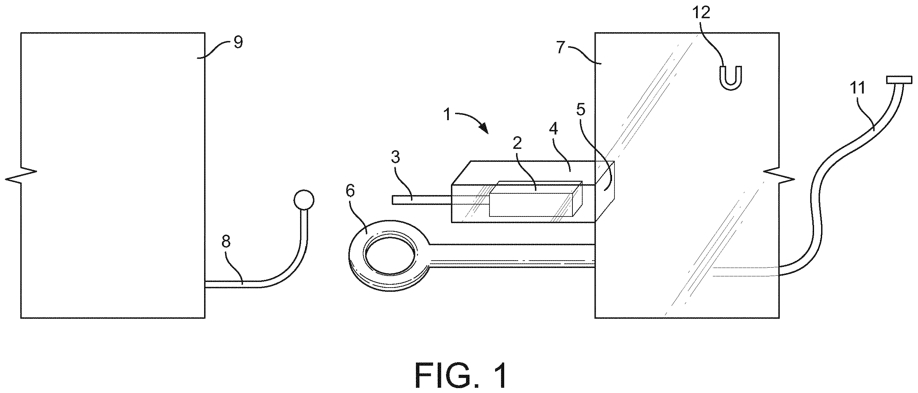

Referring first to Fig. 1, a schematic of how the device may be positioned is shown. The warning device 1 comprises an actuator body 2 and an actuator piston 3 positioned within a carry-case 4, the rear wall of the carry-case 4 forming the backplate 5 in this embodiment of the device. Examples of suitable actuators are the LA12 and the LA14 LINAK® linear actuators, available from LINAK UK Limited. Carry-case 4 is preferably made from aluminium, or another strong but light material. In Fig.1, piston 3 is in its fully forward position and is obstructing first coupler 6 of the towable ground support equipment 7. In this embodiment, the carry-case 4 of the device 1 is attached to first coupler 6, but it will be appreciated that the device 1 may be attached (temporarily or permanently) to any position that allows for the piston 3 to obstruct the first coupler 6 when the piston 3 is fully extended, but results in piston 3 not obstructing the first coupler 6 when piston 3 is retracted.

The towable ground support equipment 7 may be a towable power supply unit, or may be any other type of towable ground support equipment that is temporarily attached to an aircraft. These may include, by way of non-limiting examples; an aircraft tripod jack, a towable refueler, or passenger boarding steps/ramps. When the towable ground support equipment is a towable power supply unit, the connector will be a power supply means, preferably a power cable. When the towable ground support equipment is, for example, an aircraft tripod jack or a set of passenger boarding stairs or a ramp, the connector may be at least one clip or other suitable means for connecting the equipment to the aircraft as required.

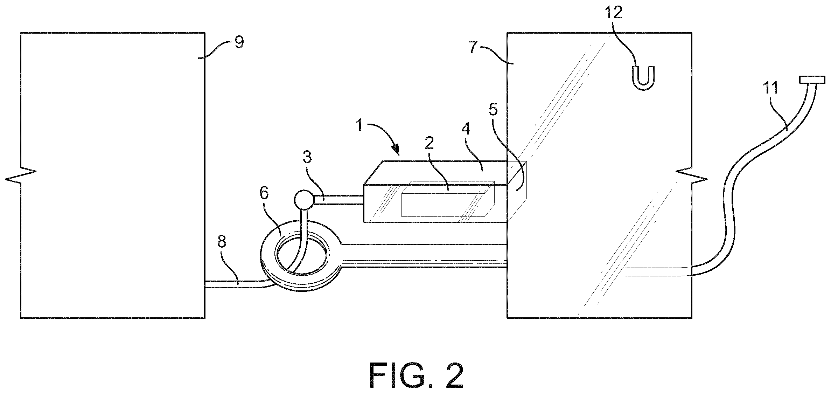

Referring now to Fig. 2, the actuator piston 3 is shown partially moved forward, and being obstructed by a tow hitch 8 of a tractor 9, tow-hitch 8 being the second coupler in this embodiment. This obstruction of piston 3 will cause the actuator body 2 to move backwards within the carry-case 4, towards the backplate 5, triggering a microswitch 10 (not pictured in this figure) which provides an alert.

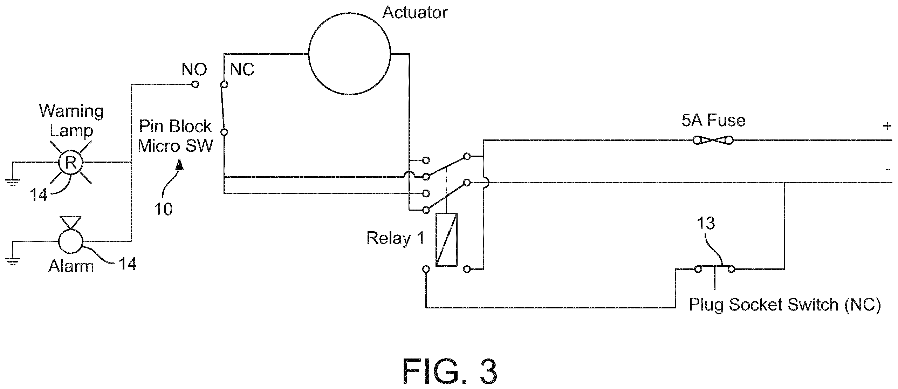

In Figs. 1 and 2, the actuator piston has been moved/moving/attempting to move into its forward-most position because a stowable connector 11 of the towable ground support equipment is not stowed in its holster 12 and therefore there is a chance that connector 11 could be connected to the aircraft. The removal of the connector 11 from the holster 12 opens a normally closed switch 13, triggering the actuator piston to move forwards as explained in Fig. 3, a circuit diagram for the embodiment described in Figs. 1 and 2. In Figs. 1 and 2, the holster is shown on the towable ground support equipment, however it is apparent that the holster may instead be positioned on the tractor 9, on the warning device, on the aircraft, or any other suitable position.

In Fig 1, the piston has met no obstruction, and therefore the actuator body 2 has not moved backwards towards the backplate 5, and the microswitch 10 has not been triggered, so that no alert 14 will be provided to the crew operating the towable ground support equipment. In Fig 2, the piston has met an obstruction and cannot move further forwards, and therefore the continued operation of the actuator while the piston is unable to move forwards will result in the actuator body 2 moving backwards towards the backplate 5, triggering microswitch 10 and causing an alert 14 to be provided to the crew operating the towable ground support equipment. Microswitch 10 is preferably an IP67 rated microswitch. In the circuit diagram of Fig. 3, the alert provided consists of a warning light and an alarm, but it will be readily appreciated that other forms of alert could be substituted or added if required. For example, when the towable ground support unit is a ground power unit positioned on a towable trailer, the alert could include switching off the ground power unit. In alternative embodiments, any suitable alert or combination of alerts could be provided. The exact type of alarm or warning light used is not important: there are a vast array of suitable lights and alarms that are commercially available.

As is also apparent from Fig. 3, in the present embodiment of the device, if microswitch 10 is triggered causing the alert, the power to the actuator will also be cut. This prevents the actuator motor burning out, it prevents the fingers of the persons operating the towable ground support unit getting injured, and it prevents the piston 3 from getting jammed onto the obstruction, particularly when the obstruction is the tow-hitch 8 that has been erroneously left in the first coupler 6.

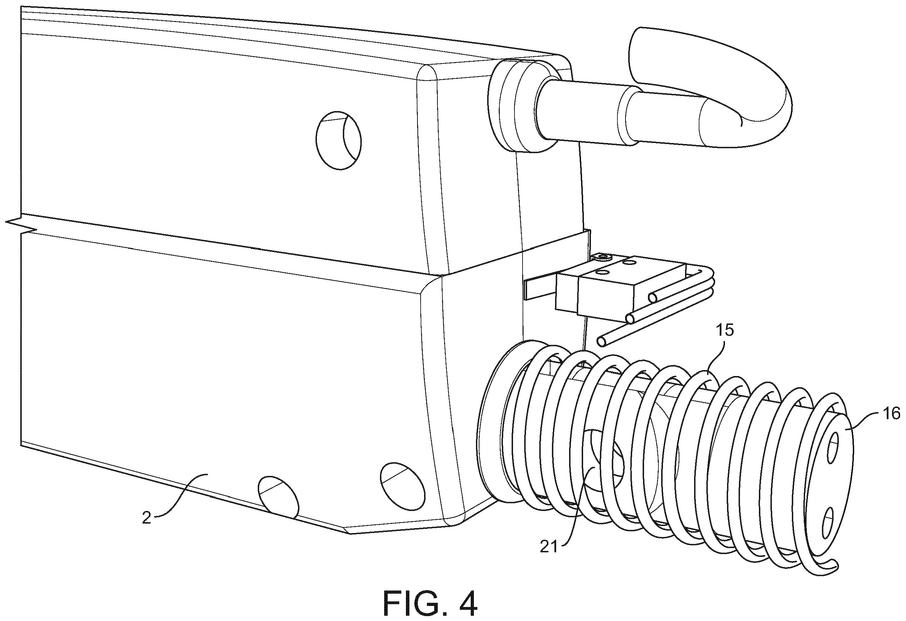

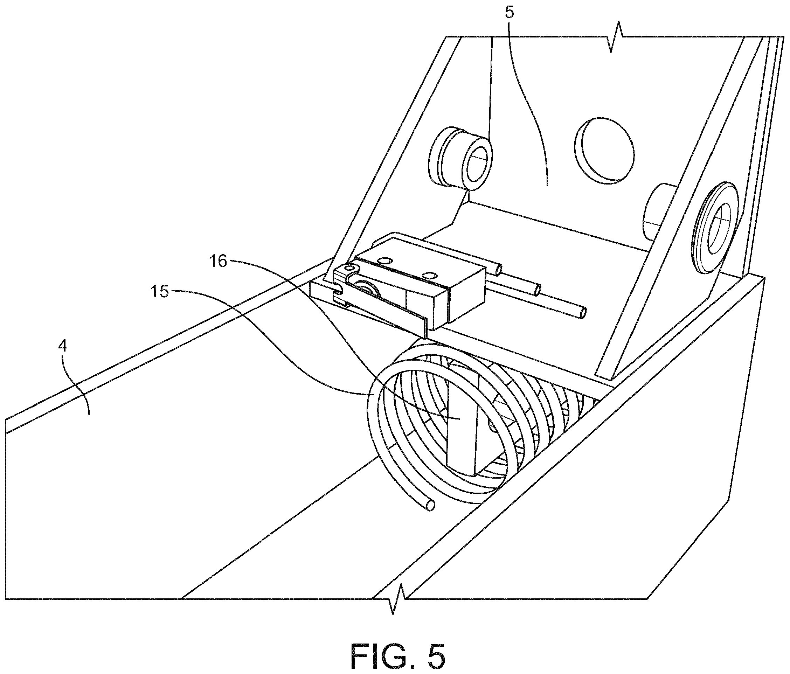

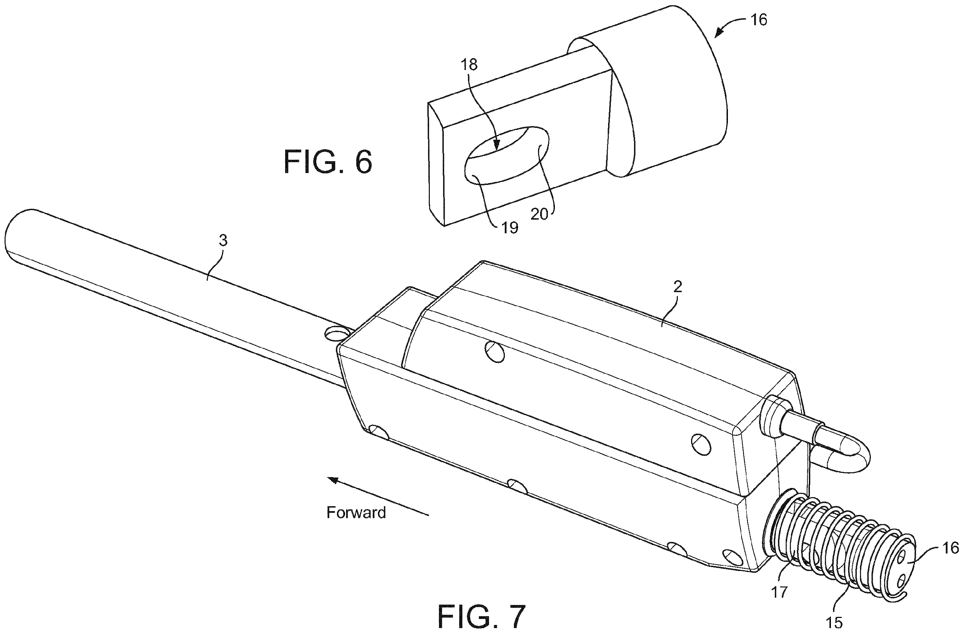

Fig. 4 and Fig. 5 show an arrangement to bias the actuator body forwards relative to backplate 5, the biasing means being a helical spring 15. A mounting boss 16 is positioned on backplate 5, the mounting boss being arranged to cooperate with a protrusion 17 on the rear of the actuator body. As best shown in Fig. 6, the mounting boss 16 comprises an elongate slot 18, slot 18 having a front 19 and a rear 20. The mounting boss 16 and the protrusion 17 are connected by a mounting pin (not pictured) that passes through slot 18 and through a hole 21 in protrusion 17.

When the actuator body 2 is biased in its forward-most position, with spring 15 at generally its natural length, the mounting pin will be at the front 19 of slot 18. When an obstruction in front of the actuator piston 3 causes the actuator body 2 to move backwards, spring 15 will be compressed, and the actuator body 2 will trigger microswitch 10, causing the above discussed alerts and cutting the power to the actuator in accordance with the circuit diagram of Fig. 3. The distance that actuator body 2 can move backwards is the length of the slot 18. In the present embodiment, the slot 18 allows for 4mm of movement of the mounting pin and of the actuator body 2 relative to the backplate.

When the obstruction is removed from the actuator piston 3, spring 15 is able to extend back to its natural length, pushing the actuator body 2 forwards and releasing microswitch 10. When microswitch 10 is released, power is restored to the actuator. Preferably, the spring 15 is weak enough that it allows a person to manually push the actuator backwards, compressing the spring 15, in order to safely remove the obstruction.

In an alternative embodiment (not pictured) there is also provided an override function that can cause the actuator piston to move in a backwards direction regardless of whether there is any obstruction present. Such a system could simply comprise an additional circuit (connected to the same or a difference power source from the main power source for the device) that is capable of being energised via an over-ride switch to drive the actuator piston in a backwards direction. Such an override function would mean that even if the backwards movement of the actuator body 2 resulted in the mounting pin reaching the rearmost end 20 of the elongate slot 18 (or, if an alternative fixing means is used, when the actuator body is at the rear-most position allowed by the fixing means), whether this occurs because the system is not provided with a mechanism to cut power to the actuator when the actuator meets an obstruction, or because a fault or error has occurred in the cutting of the power to the actuator when such a mechanism is present, the actuator piston could still be moved backwards, allowing the actuator piston to be released from any obstacle.

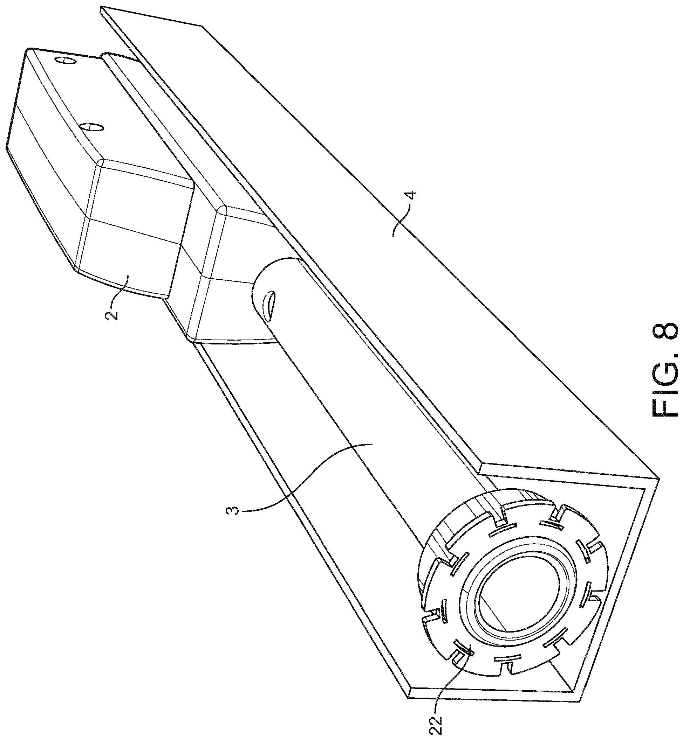

Fig. 7 shows the actuator without any carry case or the back-plate (spring and mounting boss are shown), and Fig. 8 shows how the actuator may be positioned within a carry-case 4. In the embodiment of Fig. 8, the forward-most end of the piston 3 has a self-aligning bearing 22, which reduces dirt ingress into the carry-case of the device. One example of a suitable bearing is a self-lubricating plastic bearing, such as the spherical, self-aligning Igubal® bearings offered by Igus®.

## Claims

1. A warning device (1) for providing an alert (14) to persons operating an aircraft ground support equipment (7), of the kind having a connector (11) that is connected in use to an aircraft and occupies a stowed position when not so connected, the ground support equipment (7) being provided with a first coupler (6) adapted to couple with a second coupler mounted on a towing device to allow the ground support equipment to be towed by the towing device away from the aircraft; the warning device (1) comprising: an alert mechanism, an actuator and a backplate (5), the actuator comprising an actuator body (2) and a piston (3), the actuator body (2) being biased in a forward direction away from the backplate (5), and the actuator being provided with a drive means providing drive to the actuator to extend the piston (3) out of the actuator body (2) in said forward direction towards said first coupler (6) to occlude or obstruct it; the drive means being disabled when the connector (11) is in the stowed position, and the actuator body (2) being caused to move against the bias towards the backplate (5) in the opposite direction to said forward direction if the piston (3) engages an obstruction such as the second coupler (8) indicating that the ground support equipment (7) is coupled to the towing device, and the actuator continues to operate, which backwards motion triggers said alert mechanism.

2. A warning device according to Claim 1, wherein the alert (14) provided is selected from one or more of: a warning light, an alarm, and cutting a power supply to the actuator.

3. A warning device according to Claim 1, wherein the towable ground support equipment (7) is a ground power unit, and wherein the alert (14) provided comprises switching off the ground power unit.

4. A warning device according to any preceding Claim, wherein the actuator is arranged so that a limited distance of backwards movement of the actuator body (2) relative to the backplate (5) is permitted before the alert mechanism is triggered.

5. A warning device according to any preceding Claim, wherein the warning device (1) further comprises a mounting boss (16) affixed to the backplate (5), the mounting boss (16) comprising an elongate slot (18), and the actuator body (2) further comprises a mounting pin which passes through the elongate slot (18), the mounting pin being able to slidably move along the slot, allowing controlled motion of the actuator body (2) relative to the backplate (5).

6. A warning device according to Claim 5, wherein the elongate slot (18) allows for 0-2cm movement of the mounting pin and of the actuator body (2) relative to the backplate (5).

7. A warning device according to Claim 5, wherein the elongate slot (18) allows for 4mm movement of the mounting pin and of the actuator body (2) relative to the backplate (5).

8. A warning device according to any preceding Claim, wherein the piston (3) has a bearing on its forwardmost end.

9. A warning device according to any preceding Claim, wherein the biasing means is a spring, preferably a helical spring.

10. A warning device according to any preceding Claim, wherein the warning device (1) further comprises an override function, the override function moving the actuator piston (3) in the backwards direction.

11. A method for warning persons operating towable aircraft ground support equipment (7) when they make an error in procedure, the towable ground support equipment (7) comprising: a connector (11) adapted for connection to an aircraft in operation of the ground support equipment (7) and having a stowable position when not in use, and a first coupler (6), the first coupler (6) arranged to cooperate with a second coupler (8) mounted on a towing device for towing of the ground support equipment (7) away from an aircraft, the method comprising the steps of: mounting an actuator, comprising an actuator body (2) and a piston (3), so that the actuator body is biased away from a backplate (5) in a forward direction and the piston (3) is extendable from the actuator body (2) in operation of the actuator in said forward direction to occlude or obstruct said first coupler;
controlling the actuator so that it is inoperable when the connector (11) is in its stowed position; and
the arrangement being such that, if the piston meets an obstruction during the forward motion in said forward direction, continued operation of the actuator thereafter causes the actuator body (2) to move in a backwards direction opposite to said forward direction against said bias to trigger an alert mechanism to provide an alert (14) to the persons operating the towable ground support equipment (7).

## Patentansprüche

1. Warnvorrichtung (1) zum Bereitstellen einer Warnung (14) an Personen, die ein Flugzeug-Bodenunterstützungsgerät (7) bedienen, von der Art, die einen Anschluss (11) aufweist, der im Gebrauch mit einem Flugzeug verbunden ist und eine Stauposition einnimmt, wenn er nicht so verbunden ist, wobei das Bodenunterstützungsgerät (7) mit einer ersten Kupplung (6) versehen ist, die geeignet ist, mit einer zweiten Kupplung gekoppelt zu werden, die an einer Schleppvorrichtung montiert ist, um zu ermöglichen, dass das Bodenunterstützungsgerät durch die Schleppvorrichtung vom Flugzeug weggeschleppt wird; wobei die Warnvorrichtung (1) umfasst: einen Warnmechanismus, einen Aktuator und eine Rückplatte (5), wobei der Aktuator einen Aktuatorkörper (2) und einen Kolben (3) umfasst, wobei der Aktuatorkörper (2) in einer Vorwärtsrichtung weg von der Rückplatte (5) vorgespannt ist und der Aktuator mit einem Antriebsmittel versehen ist, das dem Aktuator einen Antrieb liefert, um den Kolben (3) aus dem Aktuatorkörper (2) in der genannten Vorwärtsrichtung zu der genannten ersten Kupplung (6) hin auszufahren, um diese zu verschließen oder zu blockieren; wobei die Antriebsmittel deaktiviert werden, wenn sich der Anschluss (11) in der verstauten Position befindet, und der Aktuatorkörper (2) veranlasst wird, sich gegen die Vorspannung in Richtung der Rückplatte (5) in der entgegengesetzten Richtung zu der genannten Vorwärtsrichtung zu bewegen, wenn der Kolben (3) mit einem Hindernis wie der zweiten Kupplung (8) in Eingriff kommt, was anzeigt, dass das Bodenunterstützungsgerät (7) mit der Zugvorrichtung gekoppelt ist und der Aktuator weiter arbeitet, wobei dessen Rückwärtsbewegung den genannten Warnmechanismus auslöst.

2. Eine Warnvorrichtung nach Anspruch 1, wobei die bereitgestellte Warnung (14) ausgewählt ist aus einem oder mehreren von: einer Warnleuchte, einem Alarm und dem Abschalten der Stromversorgung des Aktuators.

3. Eine Warnvorrichtung nach Anspruch 1, wobei das abschleppbare Bodenunterstützungsgerät (7) ein Bodenstromaggregat ist, und wobei die vorgesehene Warnung (14) das Abschalten des Bodenstromaggregats umfasst.

4. Eine Warnvorrichtung gemäß einem der vorhergehenden Ansprüche, wobei der Aktuator so angeordnet ist, dass eine begrenzte Strecke der Rückwärtsbewegung des Aktuatorkörpers (2) relativ zur Rückplatte (5) erlaubt ist, bevor der Warnmechanismus ausgelöst wird.

5. Eine Warnvorrichtung gemäß einem der vorhergehenden Ansprüche, wobei die Warnvorrichtung (1) ferner einen an der Rückplatte (5) befestigten Befestigungsbolzen (16) umfasst, wobei der Befestigungsbolzen (16) einen länglichen Schlitz (18) umfasst, und der Aktuatorkörper (2) ferner einen Befestigungsstift umfasst, der durch den länglichen Schlitz (18) hindurchgeht, wobei der Befestigungsstift in der Lage ist, sich gleitend entlang des Schlitzes zu bewegen, wodurch eine kontrollierte Bewegung des Betätigungskörpers (2) relativ zur Rückplatte (5) ermöglicht wird.

6. Eine Warnvorrichtung nach Anspruch 5, wobei der längliche Schlitz (18) eine Bewegung des Befestigungsstiftes und des Betätigungskörpers (2) von 0-2 cm relativ zur Rückplatte (5) ermöglicht.

7. Eine Warnvorrichtung nach Anspruch 5, wobei der längliche Schlitz (18) eine Bewegung des Befestigungsstiftes und des Betätigungskörpers (2) von 4 mm relativ zur Rückplatte (5) ermöglicht.

8. Eine Warnvorrichtung gemäß einem der vorhergehenden Ansprüche, wobei der Kolben (3) an seinem vordersten Ende ein Lager hat.

9. Eine Warnvorrichtung nach einem der vorhergehenden Ansprüche, wobei das Vorspannmittel eine Feder, vorzugsweise eine Schraubenfeder, ist.

10. Eine Warnvorrichtung nach einem der vorhergehenden Ansprüche, wobei die Warnvorrichtung (1) ferner eine Überbrückungsfunktion umfasst, wobei die Überbrückungsfunktion den Aktuatorkolben (3) in Rückwärtsrichtung bewegt.

11. Verfahren zum Warnen von Personen, die ein schleppbares Bodenunterstützungsgerät (7) eines Flugzeugs betreiben, wenn sie einen Fehler im Verfahren machen, wobei das schleppbare Bodenunterstützungsgerät (7) Folgendes umfasst: einen Anschluss (11), der zur Verbindung mit einem Flugzeug im Betrieb des Bodenunterstützungsgeräts (7) geeignet ist und eine verstaubare Position aufweist, wenn es nicht in Gebrauch ist, und eine erste Kupplung (6), wobei die erste Kupplung (6) so angeordnet ist, dass sie mit einer zweiten Kupplung (8) zusammenwirkt, die an einer Schleppvorrichtung zum Schleppen des Bodenunterstützungsgeräts (7) von einem Flugzeug weg montiert ist, wobei das Verfahren die folgenden Schritte umfasst: Montieren eines Aktuators, umfassend einen Aktuatorkörper (2) und einen Kolben (3), so dass der Aktuatorkörper von einer Rückplatte (5) in einer Vorwärtsrichtung weg vorgespannt ist und der Kolben (3) im Betrieb des Aktuators in der genannten Vorwärtsrichtung aus dem Aktuatorkörper (2) ausfahrbar ist, um die genannte erste Kupplung zu verschließen oder zu blockieren;
Regeln des Aktuators, so dass er nicht funktionsfähig ist, wenn sich der Anschluss (11) in seiner verstauten Position befindet; und
wobei die Anordnung derart ist, dass, wenn der Kolben während der Vorwärtsbewegung in der genannten Vorwärtsrichtung auf ein Hindernis trifft, der fortgesetzte Betrieb des Aktuators danach bewirkt, dass sich der Aktuatorkörper (2) gegen die genannte Vorspannung in eine der genannten Vorwärtsrichtung entgegengesetzte Rückwärtsrichtung bewegt, um einen Warnmechanismus auszulösen, um eine Warnung (14) an die Personen zu geben, die das abschleppbare Bodenunterstützungsgerät (7) bedienen.

## Revendications

1. Dispositif d'avertissement (1) pour fournir une alerte (14) aux personnes utilisant un équipement d'appui au sol pour aéronef (7), du type comportant un connecteur (11) qui est connecté en utilisation à un aéronef et occupe une position rangée quand il n'est pas connecté, l'équipement d'appui au sol (7) étant fourni avec un premier attelage (6) agencé pour être coupler avec un second attelage monté sur un dispositif de remorquage pour permettre à l'équipement d'appui au sol d'être remorqué par le dispositif de remorquage éloigné de l'aéronef ; le dispositif d'avertissement (1) comprenant: un mécanisme d'alerte, un actionneur et une contre-plaque (5), l'actionneur comprenant un corps d'actionneur (2) et un piston (3), le corps d'actionneur (2) étant rappelé dans une direction avant éloignée de la contre-plaque (5), et l'actionneur étant muni de moyens d'entrainement assurant l'entrainement de l'actionneur pour étendre le piston (3) en dehors du corps de l'actionneur (2) dans ladite direction avant vers ledit premier attelage (6) pour le bloquer ou l'obstruer ; les moyens d'entrainement étant désactivés lorsque le connecteur (11) est en position rangée, et le corps de l'actionneur (2) étant mis en mouvement contre le rappel vers la contre-plaque (5) dans une direction opposée à ladite direction avant si le piston (3) engage une obstruction telle que le second attelage (8) indiquant que l'équipement d'appui au sol (7) est couplé au dispositif de remorquage, et l'actionneur continue d'opérer, qui en reculant déclenche ledit mécanisme d'alerte.

2. Dispositif d'avertissement selon la revendication 1, dans lequel l'alerte (14) fournie est sélectionnée parmi un ou plusieurs : un voyant d'avertissement, une alarme et une coupure de l'alimentation électrique de l'actionneur.

3. Dispositif d'avertissement selon la revendication 1, dans lequel l'équipement d'appui au sol (7) remorquable est une unité d'alimentation au sol, et dans lequel l'alerte (14) fournie comprend la mise hors tension de l'unité d'alimentation au sol.

4. Dispositif d'avertissement selon l'une quelconque des revendications précédentes, dans lequel l'actionneur est agencé de manière à ce qu'une distance limitée du mouvement arrière du corps de l'actionneur (2) par rapport à la contre-plaque (5) est autorisée avant que le mécanisme d'alerte ne se déclenche.

5. Dispositif d'avertissement selon l'une quelconque des revendications précédentes, dans lequel le dispositif d'avertissement (1) comprend en outre un bossage de montage (16) fixé à la contre-plaque (5), le bossage de montage (16) comprenant une fente allongée (18) et le corps de l'actionneur (2) comprend en outre une goupille de montage qui traverse la fente allongée (18), la goupille de montage étant capable de se déplacer de manière coulissante le long de la fente, permettant un mouvement contrôlé du corps de l'actionneur (2) par rapport à la contre-plaque (5).

6. Dispositif d'avertissement selon la revendication 5, dans lequel la fente allongée (18) permet un mouvement de 0 -2 cm de la goupille de montage et du corps de l'actionneur (2) par rapport à la contre-plaque.

7. Dispositif d'avertissement selon la revendication 5, dans lequel la fente allongée (18) permet un mouvement de 4mm de la goupille de montage et du corps de l'actionneur (2) par rapport à la contre-plaque (5).

8. Dispositif d'avertissement selon l'une des revendications précédentes, dans lequel le piston (3) a un palier à son extrémité distale.

9. Dispositif d'avertissement selon l'une des revendications précédentes, dans lequel le moyen de rappel est un ressort, de préférence un ressort hélicoïdal.

10. Dispositif d'avertissement selon l'une des revendications précédentes, dans lequel le dispositif d'avertissement (1) comprend en outre une fonction de régulation, la fonction de régulation déplaçant le piston de l'actionneur (3) en direction arrière.

11. Procédé pour avertir les personnes utilisant un équipement d'appui au sol remorquable pour aéronef (7) lorsqu'elles réalisent une erreur de procédure, l'équipement d'appui au sol (7) remorquable comprenant : un connecteur (11) adapté pour être connecté à un aéronef en utilisation de l'équipement d'appui au sol (7) et ayant une position pouvant être rangée quand il n'est pas utilisé, et un premier attelage (6), le premier attelage (6) étant agencé pour coopérer avec un second attelage (8) monté sur un dispositif de remorquage pour le remorquage de l'équipement d'appui au sol (7) éloigné d'un aéronef, le procédé comprenant les étapes de : montage d'un actionneur, comprenant un corps de l'actionneur (2) et un piston (3), de sorte que le corps d'actionneur est rappelé à l'opposé de la contre-plaque (5) dans une direction avant et le piston (3) peut faire saillie du corps de l'actionneur (2) lors de l'utilisation de l'actionneur dans ladite direction avant pour bloquer ou obstruer ledit premier attelage ; commander l'actionneur de manière à le rendre inopérable lorsque le connecteur (11) est dans sa position rangée ; et
l'ensemble étant tel que, si le piston rencontre une obstruction pendant le mouvement avant dans la direction avant, l'utilisation continue de l'actionneur entraîne le corps de l'actionneur (2) à déplacer dans une direction arrière opposée à ladite direction avant contre ledit rappel pour déclencher un mécanisme d'alerte pour fournir une alerte (14) aux personnes utilisant l'équipement d'appui au sol (7) remorquable.
